# EUROPÄISCHE PATENTSCHRIFT

(11) **EP 3 427 223 B1**
(45) Veröffentlichungstag und Bekanntmachung des Hinweises auf die Patenterteilung: **10.03.2021**
(21) Anmeldenummer: 16819512.1
(22) Anmeldetag: 16.12.2016
(51) Int. Cl.: G06T 3/00, G02B 27/01

(54) **VERFAHREN UND HEAD-UP-DISPLAY ZUM PERSPEKTIVISCHEN TRANSFORMIEREN UND ANZEIGEN EINES BILDINHALTS SOWIE FAHRZEUG**
METHOD AND HEAD-UP DISPLAY FOR THE PERSPECTIVE TRANSFORMATION AND DISPLAYING OF IMAGE CONTENT, AND VEHICLE
PROCÉDÉ ET AFFICHAGE TÊTE HAUTE POUR TRANSFORMER EN PERSPECTIVE ET AFFICHER UN CONTENU D'IMAGE, ET VÉHICULE ASSOCIÉ

(30) Priorität: 11.03.2016 DE 102016204044
(43) Veröffentlichungstag der Anmeldung: 16.01.2019
(73) Patentinhaber: Bayerische Motoren Werke Aktiengesellschaft, 80809 München (DE)
(72) Erfinder: BROWN, Sean, 81541 München (DE); CIESLA, Christoph, 81247 München (DE); BAYERL, Tobias, 82140 Olching (DE)
(86) Internationale Anmeldenummer: PCT/EP2016/081358
(87) Internationale Veröffentlichungsnummer: WO 2017/153016

(56) Entgegenhaltungen:
- WO-A1-2006/031214
- US-A1- 2002 122 113
- US-A1- 2008 062 164
- US-A1- 2013 222 386
- US-A1- 2015 160 539
- US-B1- 6 192 393

## Beschreibung

Die Erfindung betrifft ein Verfahren und ein Head-Up-Display zum perspektivischen Transformieren und Anzeigen eines gerenderten Bildinhalts sowie ein Fahrzeug mit einem solchen Head-Up-Display.

Fahrzeuge, insbesondere Kraftfahrzeuge, weisen in der Regel Vorrichtungen zum Anzeigen von Information auf. Die Information kann sowohl den Betriebszustand des Fahrzeugs betreffen, beispielsweise den Tankfüllstand, die Geschwindigkeit, den Status der Lichtanlage, usw., als auch dem Fahrer den Betrieb des Fahrzeugs erleichtern, beispielsweise durch Anzeigen von Navigationsinformation, Anzeigen von Einparkinformation, usw. Um dem Fahrer die Information möglichst komfortabel anzuzeigen, werden Head-Up-Displays verwendet, welche die anzuzeigende Information in das natürliche Gesichtsfeld des Fahrers projizieren, wo sie der Fahrer als virtuelles Bild visuell wahrnimmt. Das natürliche Gesichtsfeld entspricht dabei dem zum Betrieb des Fahrzeugs primär zu beachtenden Fahrzeugumfeld, insbesondere dem vor dem Fahrzeug liegenden Straßenverlauf. Bei Projektion der Information beispielsweise auf die Frontscheibe des Fahrzeugs kann der Fahrer die Information ablesen, ohne den Blick von der Straße nehmen zu müssen, was die Sicherheit der Fahrzeugnutzung erhöht.

Durch Krümmungen von optischen Elementen des Head-Up-Displays und der Frontscheibe und den Umstand, dass der Fahrer in der Regel unter einem Winkel auf die Frontscheibe blickt, wird das Abbild der anzuzeigenden Information verzerrt. Um dem Fahrer die Information unverzerrt, d.h. deutlich und gut erkennbar, darzustellen, muss die Abbildung der Information daher an den Strahlengang von bilderzeugender Vorrichtung des Head-Up-Displays über optische Elemente des Head-Up-Displays und Frontscheibe des Fahrzeugs bis zum Auge des Fahrers angepasst werden.

Zur Anpassung an den Strahlengang werden die anzuzeigenden Informationen als gerenderter Bildinhalt an ein Graphikmodul (Graphik-Engine) übergeben, welches den gerenderten Bildinhalt einer Transformation unterzieht. Die Transformation ist dazu ausgelegt, die Verzerrung, welche insbesondere durch gekrümmte optische Elemente, eine gekrümmte Frontscheibe und einen nicht senkrechten Blickwinkel auf die Frontscheibe entsteht, zu kompensieren. In anderen Worten wird durch die Transformation des Graphikmoduls der gerenderte Bildinhalt verzerrt, um dem Beobachter, insbesondere dem Fahrer, die visuelle Wahrnehmung eines entzerrten Abbildes des gerenderten Bildinhalts zu ermöglichen.

US 2015/160539 A1 offenbart ein System und ein Verfahren zum Kalibrieren eines Bildprojektionssystems unter Verwendung von Bildaufnahmegeräten.

US 2008/062164 A1 beschreibt ein System und Verfahren zum Kalibrieren eines Anzeigegeräts, um Verzerrungen wegen verschiedener Komponenten wie eine oder mehrere Linsen und Spiegel, einer Projektionsgeometrie, einer lateralen, chromatischen Aberration, und einem Farbenversatz zu beseitigen.

US 2013/222386 A1 offenbart ein Verfahren zum Verarbeiten eines Originalbilds für eine Projektion auf einem Projektionsschirm durch einen Projektor.

US 2002/122113 A1 beschreibt ein Kameraanordnung, die eine Vielzahl von Komponentenbilder aufnimmt, die in eine einzelne Szene integriert werden.

WO 2006/031214 A1 beschreibt ein System zum Repräsentieren einer zweidimensionalen, räumlichen Transformation, wobei das System die Transformation durch inverse, abgebildete Grid-Daten bezüglich ausgewählter Geometrieparameter beschreibt.

US 6 192 393 B1 beschreibt ein Verfahren zum Anschauen von Panoramen über ein Client-Server-Netzwerk. Es ist eine Aufgabe der Erfindung, ein Verfahren, ein Head-Up-Display sowie ein Fahrzeug anzugeben, bei welchem das Transformieren und Anzeigen eines gerenderten Bildinhalts flexibler und schneller durchgeführt wird und die Transformation insbesondere einfacher an Änderungen des Strahlengangs, beispielsweise durch eine Änderung der Position des Abbildes auf der Projektionsfläche, angepasst werden kann.

Diese Aufgabe wird durch das Verfahren gemäß Anspruch 1 und das Head-Up-Display gemäß Anspruch 11 sowie ein entsprechendes Fahrzeug gemäß Anspruch 12 gelöst. Vorteilhafte Ausgestaltungen der Erfindung sind Gegenstand der abhängigen Ansprüche. Die Offenbarung der Ansprüche wird ausdrücklich zu einem Teil der Beschreibung gemacht.

Beim erfindungsgemäßen Verfahren zum perspektivischen Transformieren und Anzeigen eines gerenderten Bildinhalts durch ein Head-Up-Display nach einem ersten Aspekt der Erfindung wird der gerenderte, d.h. anzuzeigende, Bildinhalt in mehrere Bereiche, insbesondere Kacheln bzw. Rechtecke, aufgeteilt. Die Kacheln, bzw. der in den einzelnen Kacheln enthaltene Bildinhalt, werden bzw. wird vorzugsweise jeweils durch eine Perspektivtransformation transformiert und die einzelnen, perspektivisch transformierten Kacheln, bzw. in den perspektivisch transformierten Kacheln enthaltenen perspektivisch transformierten Bildinhalte, zu einem perspektivisch transformierten Bildinhalt zusammengefügt. Der perspektivisch transformierte Bildinhalt wird auf eine Projektionsfläche projiziert, welche dem Head-Up-Display zugeordnet ist.

Das Verfahren legt die perspektivisch transformierten Kacheln in einem Puffer-Speicher ab. Der Puffer-Speicher erlaubt einen besonders schnellen Zugriff auf die darin abgelegten perspektivisch transformierten Kacheln, insbesondere beim Zusammensetzen zu einem gesamten perspektivisch transformierten, anzuzeigenden Bild, bzw. Bildinhalt.

Das Verfahren transformiert nur den Teil der mehreren Kacheln perspektivisch, welcher Elemente des Bildinhalts enthält, die sich bezüglich eines zuvor zu transformierenden und anzuzeigenden Bildinhalts geändert haben. Insbesondere werden die restlichen, zum Zusammensetzen der perspektivisch transformierten Kacheln zu einem perspektivisch transformierten, anzuzeigenden Bildinhalt benötigten perspektivisch transformierten Kacheln aus dem Puffer-Speicher geladen. Dadurch wird insbesondere sichergestellt, dass ein von den Perspektivtransformationen beanspruchter Prozessor nur die Teile des gerenderten Bildinhalts verarbeitet, welche sich von dem zuvor perspektivisch transformierten und angezeigten Bildinhalt unterscheiden, d.h. geänderte anzuzeigende Information bzw. eine geänderte Darstellung der anzuzeigenden Information enthalten, wodurch die Rechenleistung dieses Prozessors im Vergleich zur Durchführung einer Perspektivtransformation aller Kacheln signifikant vermindert wird. Dadurch kann die Rechenleistung eines solchen Prozessors besonders effizient für Berechnungen eingeteilt werden und eine Bildrate, mit der gerenderter Bildinhalt perspektivisch transformiert wird, von 30 bis 90, bevorzugt von 45 bis 75, besonders bevorzugt von im Wesentlichen 60 perspektivisch transformierten Bildinhalten pro Sekunde erreicht werden. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

Weiter transformiert das Verfahren nur einen Teil der mehreren Kacheln perspektivisch und die restlichen transformierten Kacheln zum Zusammensetzen des transformierten Bildes werden aus dem Puffer-Speicher geladen. Dadurch kann die Zusammensetzung des perspektivisch transformierten, anzuzeigenden Bilds, bzw. Bildinhalts, signifikant beschleunigt werden. Insbesondere kann damit eine Bildrate, mit der gerenderter Bildinhalt perspektivisch transformiert wird, von 30 bis 90, bevorzugt von 45 bis 75, besonders bevorzugt von im Wesentlichen 60 perspektivisch transformierten Bildinhalten pro Sekunde erreicht werden. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

Das erfindungsgemäße Head-Up-Display zum perspektivischen Transformieren und Anzeigen eines gerenderten Bildinhalts nach einem zweiten Aspekt der Erfindung weist eine Steuereinheit sowie eine Projektionseinheit auf. Insbesondere ist das erfindungsgemäße Head-Up-Display dazu eingerichtet, das perspektivische Transformieren und Anzeigen eines gerenderten Bildinhalts nach dem ersten Aspekt der Erfindung durchzuführen. Bevorzugt weist die Steuereinheit ein erstes Modul, welches zum Aufteilen des gerenderten, d.h. anzuzeigenden, Bildinhalts in mehrere Bereiche, insbesondere Kacheln bzw. Rechtecke, eingerichtet ist, ein zweites Modul, insbesondere ein Graphikmodul, welches zum Transformieren der einzelnen Kacheln, bzw. dem in den einzelnen Kacheln enthaltenen Bildinhalt, durch jeweils eine Perspektivtransformation, insbesondere über eine Graphik-Programmierschnittstelle, eingerichtet ist, sowie ein drittes Modul, welches zum Zusammensetzen der einzelnen, perspektivisch transformierten Kacheln zu einem transformierten Bildinhalt eingerichtet ist, auf. Ferner ist die Projektionseinheit vorzugsweise zum Projizieren des perspektivisch transformierten Bildinhalts auf eine Projektionsfläche, die dem Head-Up-Display zugeordnet ist, eingerichtet.

Das erste, zweite und dritte Modul kann jeweils als Hardware- oder Softwaremodul ausgebildet sein. Insbesondere können ein oder zwei Module als Softwaremodul und das oder die restlichen Module als Hardwaremodul ausgebildet sein.

Bevorzugt wird ein als Softwaremodul ausgebildetes erstes, zweites oder drittes Modul auf einem oder mehreren Prozessoren, insbesondere Hauptprozessor oder Hauptprozessoren (CPU) der Steuereinheit ausgeführt.

Das erfindungsgemäße Fahrzeug gemäß einem dritten Aspekt der Erfindung weist ein Head-Up-Display gemäß dem zweiten Aspekt der Erfindung auf.

Die in Bezug auf den ersten Aspekt der Erfindung und dessen vorteilhafte Ausgestaltung beschriebenen Merkmale und Vorteile gelten auch für den zweiten Aspekt und den dritten Aspekt der Erfindung und deren vorteilhafte Ausgestaltungen sowie umgekehrt.

Die Erfindung basiert auf dem Ansatz, ein anzuzeigendes Bild, insbesondere einen gerenderten Bildinhalt, welches bzw. welcher anzuzeigende Information enthält, in mehrere Bereiche, beispielsweise Kacheln, insbesondere Rechtecke bzw. rechteckige Kacheln, aufzuteilen und diese Bereiche separat mit jeweils einer Perspektivtransformation zu transformieren. In anderen Worten wird die Perspektivtransformation des Bilds, d.h. des gerenderten Bildinhalts, modular durchgeführt. Anschließend werden die perspektivisch transformierten Bereiche, d.h. Kacheln, wieder zu einem nun perspektivisch transformierten Bild bzw. Bildinhalt zusammengesetzt, welches bzw. welcher in bzw. von einem Head-Up-Display auf eine Projektionsfläche projiziert wird und von einem Beobachter, insbesondere einem Fahrer in einem Fahrzeug mit einem Head-Up-Display, aufgrund der vorgenommenen Perspektivtransformation unverzerrt, d.h. deutlich und gut erkennbar, visuell wahrgenommen werden kann.

Die Perspektivtransformation einzelner Kacheln ist dabei vorzugsweise auf die jeweils einzelne perspektivisch zu transformierende Kachel abgestimmt. Macht eine Änderung im Strahlengang des Head-Up-Displays die Anpassung des anzuzeigenden Bilds, d.h. des gerenderten Bildinhalts, notwendig, kann dies durch Abstimmung bzw. Anpassung einzelner Perspektivtransformationen bewirkt werden. Insbesondere ist es nicht notwendig, jede einzelne der Perspektivtransformationen abzustimmen bzw. anzupassen, bzw. eine Anpassung, d.h. Änderung, einer einzigen Perspektivtransformation, welche das gesamte anzuzeigende Bild, d.h. den gesamten gerenderten Bildinhalt, transformiert, vorzunehmen. Dies erfordert im Allgemeinen eine hohe Rechenleistung und verringert daher die Bildrate, mit welcher die transformierten Bilder durch das Head-Up-Display angezeigt werden können.

Vorzugsweise ist es durch die Erfindung insbesondere möglich, auf das perspektivische Transformieren einzelner Kacheln, sofern dies für eine verzerrungsfreie Darstellung bzw. Anzeige des zusammengesetzten und transformierten Bilds, d.h. Bildinhalts, nicht notwendig ist, zu verzichten. Insbesondere wenn nur ein Teil des anzuzeigenden Bilds, d.h. des gerenderten Bildinhalts, durch eine Perspektivtransformation bzw. Transformation zur Anpassung an den Strahlengang des Head-Up-Displays bzw. der Beobachterposition ver- bzw. entzerrt werden muss, kann durch die modulare Perspektivtransformation der Rechenaufwand zur perspektivischen Ver- bzw. Entzerrung vermindert werden, indem einzelne Kacheln, deren Bildinhalt nicht an den Strahlengang angepasst werden muss, nicht transformiert werden.

Vorzugsweise erlaubt die Perspektivtransformation einzelner Kacheln, d.h. eine modulare Perspektivtransformation, darüber hinaus eine speicher- und rechenzeitsparende Perspektivtransformation durch ein Graphikmodul, das vorzugsweise weitverbreitet ist und insbesondere auf aktuellen Mikroprozessoren stabil läuft, insbesondere auf verschiedenen Plattformen. Weiter vorzugsweise ist dieses Graphikmodul dazu ausgebildet, Vektorgraphiken insbesondere hardware-beschleunigt zu verarbeiten, so dass einzelne Perspektivtransformationen auf Vektorbasis besonders schnell und effizient durchgeführt werden können.

Insgesamt ermöglicht die Erfindung ein schnelles und flexibles Transformieren und Anzeigen eines gerenderten Bildinhalts.

In einer vorteilhaften Ausgestaltung des Verfahrens zum perspektivischen Transformieren und Anzeigen eines gerenderten Bildinhalts wird beim Transformieren jede einzelne Kachel hinsichtlich mindestens einer der folgenden Merkmale perspektivisch transformiert: Trapezform, Wölbung, Streckung bzw. Stauchung, Rotation, Versatz. Insbesondere kann jede einzelne Kachel auch durch eine Kombination wenigstens zwei dieser Merkmale perspektivisch transformiert werden. Dadurch ist eine zuverlässige Anpassung des anzuzeigenden Bildinhalts an den Strahlengang des Head-Up-Displays möglich.

In einer weiteren vorteilhaften Ausgestaltung des Verfahrens zum perspektivischen Transformieren und Anzeigen eines gerenderten Bildinhalts weisen angrenzende Kacheln überlappende Bildinhalte auf. Insbesondere weisen die überlappenden Bildinhalte jeweils eine Breite von einem, zwei oder drei Bildpunkten auf. Dadurch wird sichergestellt, dass die perspektivisch transformierten Kacheln beim Zusammensetzen zu einem perspektivisch transformierten Bildinhalt ebenfalls überlappenden, perspektivisch transformierten Bildinhalt aufweisen bzw. die Kanten der perspektivisch transformierten Kacheln insbesondere bündig abschließen. Insbesondere wird damit zuverlässig verhindert, dass der zusammengesetzte, perspektivisch transformierte Bildinhalt Bereiche aufweist, welche nicht durch mindestens eine perspektivisch transformierte Kachel abgedeckt und daher als farbneutrale, insbesondere schwarze oder weiße, Bildpunkte dargestellt werden. Vorzugsweise wird durch dieses Merkmal des Verfahrens auch das Entstehen dieser Bereiche durch das Anwenden einer Kantenglättung, insbesondere durch einen Glättungsfilter, vermieden.

In einer weiteren vorteilhaften Ausgestaltung des Verfahrens zum perspektivischen Transformieren und Anzeigen eines gerenderten Bildinhalts liegt der Bildinhalt als Rastergraphik vor, wobei durch die Perspektivtransformation einzelne Bildpunkte einer Kachel verschoben werden. Dadurch kann der gerenderte Bildinhalt besonders einfach in verschiedene Bereiche, insbesondere Kacheln bzw. Rechtecke bzw. rechteckige Kacheln, aufgeteilt werden, wobei jeweils eine vorgegebene Anzahl an Bildpunkten der Rastergraphik einem Bereich, bzw. einer Kachel, zugeordnet werden. Durch die Perspektivtransformation werden die einzelnen, zu jeweils einer Kachel gehörenden Bildpunkte der Rastergraphik verschoben. Somit kann die Perspektivtransformation besonders einfach realisiert werden.

Vorzugsweise weist die Rastergraphik eine bestimmte Farbtiefe, insbesondere 32, 24, 16, 8 oder 4 bit, auf. Weiter vorzugsweise kann die Rastergraphik auch eine Farbtiefe aufweisen, die zwischen diesen Werten liegt. Weiter vorzugsweise kann die Rastergraphik auch eine Farbtiefe aufweisen, die größer als 32 bit oder kleiner als 4 bit ist. Weiter vorzugsweise weisen unterschiedliche Bildpunkte der Rastergraphik jeweils unterschiedliche Farbtiefen auf. Insbesondere weisen bevorzugt jeweils einige zusammenhängende Bildpunkte der Rastergraphik, welche jeweils zu einer einzelnen Kachel gehören, die gleiche Farbtiefe auf. Insbesondere bevorzugt ist die Farbtiefe einer einzelnen Kachel nur so hoch wie zur farbechten Darstellung des in den einzelnen Kacheln enthaltenden Bildinhalts notwendig. Dadurch benötigt der gerenderte Bildinhalt besonders wenig Speicherplatz, insbesondere in einem Puffer-Speicher, und die Perspektivtransformationen der Kacheln können besonders effizient durchgeführt werden.

In einer weiteren vorteilhaften Ausgestaltung des Verfahrens zum perspektivischen Transformieren und Anzeigen eines gerenderten Bildinhalts wird bei der Perspektivtransformation eine Interpolation, insbesondere eine lineare Interpolation, einzelner Bildpunkte einer Kachel, insbesondere der Bildpunkte, welche an durch die Perspektivtransformation verschobene Bildpunkte grenzen und/oder zwischen diesen liegen, durchgeführt. Dadurch wird zuverlässig vermieden, dass Bereiche mit Bildpunkten, denen kein Farbwert zugeordnet wurde, entstehen. Vorzugsweise ist die Anzahl der Bildpunkte pro Kachel gering, so dass einzelne Bildpunkt bei der Perspektivtransformation nicht über große Abstände verschoben werden. In diesem Fall liefert insbesondere eine lineare Interpolation der zwischen den bei der Perspektivtransformation verschobenen Bildpunkten liegenden Bildpunkte einen perspektivisch transformierten Bildinhalt, dessen von einem Head-Up-Display erzeugtes Abbild deutlich und klar, d.h. insbesondere ohne Artefakte, visuell wahrgenommen werden kann. Eine lineare Interpolation verursacht insbesondere nur einen geringen Rechenaufwand, d.h. die Belastung eines berechnenden Prozessors ist gering, weswegen die Perspektivtransformation schnell und effizient durchgeführt werden kann.

In einer weiteren vorteilhaften Ausgestaltung des Verfahrens zum perspektivischen Transformieren und Anzeigen eines gerenderten Bildinhalts werden die einzelnen Kacheln durch Multiplikation mit einer Transformationsmatrix perspektivisch transformiert. Die Multiplikation mit einer Transformationsmatrix ist eine besonders einfache und präzise Weise, eine Transformation durchzuführen. Eine entsprechende Perspektivtransformation kann daher besonders schnell und effizient, insbesondere von einem Graphikmodul, durchgeführt werden. Insbesondere ist es daher möglich, für die Bildrate, mit welcher gerenderte Bildinhalte perspektivisch transformiert werden, einen Wert von 30 bis 90, bevorzugt von 45 bis 75, besonders bevorzugt von im Wesentlichen 60 perspektivisch transformierten Bildinhalten pro Sekunde zu erreichen. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

Vorzugsweise werden bei der Matrixmultiplikation mit einer Transformationsmatrix die Positionen einzelner Bildpunkte einer Kachel, insbesondere der vier Eckpunkte, die bevorzugt durch Stützvektoren gegeben sind, mit der Transformationsmatrix multipliziert. Stützvektoren sind hierbei Vektoren, welche die Position eines Bildpunktes relativ zu einem Ursprung angeben, wobei der Ursprung insbesondere ein Eck- oder Mittelpunkt einer Kachel oder des Bilds, d.h. des gerenderten Bildinhalts, sein kann. Durch die Multiplikation der Stützvektoren mit der Transformationsmatrix verschiebt sich die Lage der einzelnen Bildpunkte der Kachel relativ zu dem Ursprung. Vorzugsweise werden Bildpunkte, die zwischen, insbesondere angrenzend an diesen verschobenen Bildpunkten liegen, interpoliert, insbesondere durch eine lineare Interpolation. Bevorzugt werden dadurch Lücken in dem Bildinhalt der perspektivisch transformierten Kachel geschlossen.

Bevorzugt kann durch die Wahl der Anzahl bzw. der Ausmaße, d.h. der Größe oder Fläche, der Kacheln beim Aufteilen des anzuzeigenden Bildinhalts die Anzahl der insbesondere linear zu interpolierenden Bildpunkte bestimmt, insbesondere begrenzt, werden, da mit steigender Anzahl der Kacheln die Anzahl der Bildpunkte pro Kachel sinkt, welche perspektivisch transformiert werden müssen. Dadurch wird sichergestellt, dass insbesondere eine lineare Interpolation von Bildpunkten, die zwischen verschobenen Bildpunkten, insbesondere grenzend an verschobenen Bildpunkten, liegen, klaren und deutlichen, perspektivisch transformierten Bildinhalt auf den Kacheln bzw. dem zusammengesetzten perspektivisch transformierten und über das Head-Up-Display anzuzeigenden Bildinhalt erzeugt, d.h. perspektivisch transformierten Bildinhalt ohne Artefakte.

Vorzugsweise wird bzw. werden die Anzahl bzw. die Ausmaße der Kacheln größer als eine kritische Anzahl bzw. Größe gewählt, bei welcher die Anzahl der insbesondere linear zu interpolierenden Bildpunkte so klein ist, dass Artefakte, insbesondere Ecken, im perspektivisch transformierten Bildinhalt auftreten. Dadurch wird sichergestellt, dass der zusammengesetzte, perspektivisch transformierte und über das Head-Up-Display anzuzeigende Bildinhalt keine Artefakte, insbesondere Ecken, aufweist. Vorzugsweise wird die Anzahl und/oder Größe der Kacheln so gewählt, dass die Kacheln überlappen, insbesondere jeweils mit einem oder zwei Bildpunkten.

In einer weiteren vorteilhaften Ausgestaltung des Verfahrens zum perspektivischen Transformieren und Anzeigen eines gerenderten Bildinhalts wird die Transformationsmatrix aus einer Vielzahl von Transformationsmatrizen gewählt. Insbesondere beinhaltet die Vielzahl der Transformationsmatrizen dabei vorzugsweise jeweils eine Transformationsmatrix für jede perspektivisch zu transformierende Kachel. Dadurch kann sichergestellt werden, dass die Transformationsmatrizen an den Strahlengang der Abbildung der jeweils perspektivisch zu transformierende Kachel angepasst sind, bzw. insbesondere einzeln an Änderungen im Strahlengang der Abbildung der jeweils perspektivisch zu transformierenden Kachel angepasst werden können. Weiter vorzugsweise beinhaltet die Vielzahl der Transformationsmatrizen verschiedene perspektivische Transformationen.

Durch die Verwendung von Transformationsmatrizen ist jegliche vektorielle perspektivische Transformation realisierbar. Dadurch wird kann die Perspektivtransformation besonders gut an den Strahlengang angepasst werden. Besonders bevorzugt betrifft die mit einer Transformationsmatrix aus der Vielzahl der Transformationsmatrizen durchgeführte perspektivische Transformation mindestens eines der folgenden Merkmale: Trapezform, Wölbung, Streckung bzw. Stauchung, Rotation, Versatz.

In einer weiteren vorteilhaften Ausgestaltung des Verfahrens zum perspektivischen Transformieren und Anzeigen eines gerenderten Bildinhalts wird das perspektivische Transformieren der einzelnen Kacheln von einem Graphikmodul, bevorzugt über eine Graphik-Programmierschnittstelle, insbesondere OpenVG, durchgeführt. Das Verwenden eines Graphikmoduls beschleunigt die perspektivische Transformation der einzelnen Kacheln, insbesondere durch eine Hardwarebeschleunigung, signifikant und verringert die Rechenbelastung eines zentralen Prozessors (CPU). Vorzugsweise wird eine Graphik-Programmierschnittstelle verwendet, die weit verbreitet ist und standardmäßig auf Mikroprozessoren zur Verfügung steht. Weiter vorzugsweise steht die Graphik-Programmierschnittstelle auf mehreren Plattformen zur Verfügung. Ferner erlaubt die verwendete Graphik-Programmierschnittstelle vorzugsweise die Verwendung eines Graphikmoduls, welches die hardwarebeschleunigte Verarbeitung bzw. Berechnung von Vektorgraphik zur Verfügung stellt.

In einer weiteren vorteilhaften Ausgestaltung des Verfahrens zum perspektivischen Transformieren und Anzeigen eines gerenderten Bildinhalts weisen verschiedene Teile der mehreren Kacheln unterschiedliche Farbtiefen auf, insbesondere 32, 24, 16, 8 und 4 bit. Weiter vorzugsweise können verschiedene Teile der mehreren Kacheln auch eine Farbtiefe aufweisen, die zwischen diesen Werten liegt. Weiter vorzugsweise können verschiedene Teile der mehreren Kacheln auch eine Farbtiefe aufweisen, die größer als 32 bit oder kleiner als 4 bit ist. Insbesondere weisen die Kacheln jeweils die geringstmögliche Farbtiefe auf, bei der der jeweils enthaltenen Bildinhalt noch farbecht, d.h. ohne Verminderung der Farbqualität, angezeigt bzw. dargestellt werden kann. Vorzugsweise werden die Perspektivtransformationen, insbesondere die vorzugsweise linearen Interpolationen einzelner Bildpunkte, der mehreren Kacheln mit den unterschiedlichen Farbtiefen bei der jeweiligen Farbtiefe der perspektivisch zu transformierenden Kachel durchgeführt. Dadurch wird sichergestellt, dass die Perspektivtransformation bzw. die perspektivisch transformierte Kachel nur wenig Speicherplatz bzw. die vorzugsweise lineare Interpolation wenig Rechenbedarf benötigt. Dadurch können die Perspektivtransformationen, insbesondere die vorzugsweise linearen Interpolationen einzelner Bildpunkte, besonders schnell und effizient durchgeführt werden.

In einer weiteren vorteilhaften Ausgestaltung des Verfahrens zum perspektivischen Transformieren und Anzeigen eines gerenderten Bildinhalts werden die mehreren Kacheln bei der perspektivischen Transformation durch eine Punkt- oder Linienspiegelung gespiegelt und zu einem perspektivisch transformierten, gespiegelten Bildinhalt zusammengesetzt. Dadurch kann die Bildorientierung des perspektivisch transformierten, anzuzeigenden Bildinhalts an den Strahlengang des Head-Up-Displays angepasst werden. Insbesondere kann durch die Spiegelung die Verwendung zusätzlicher optischer Elemente im Head-Up-Display, welche die Bildorientierung des perspektivisch transformierten Bildinhalts zur fehlerfreien Abbildung auf der Projektionsfläche des Head-Up-Displays ändern, insbesondere drehen bzw. spiegeln, verzichtet werden. Dadurch erhält das Head-Up-Display einen besonders einfachen Aufbau.

Weitere Merkmale, Vorteile und Anwendungsmöglichkeiten der Erfindung ergeben sich aus der nachfolgenden Beschreibung im Zusammenhang mit den Figuren. Es zeigen wenigstens teilweise schematisch:
- Fig. 1: eine Ausführungsform des Verfahrens zum Transformieren und Anzeigen eines gerenderten Bildinhalts durch ein Head-Up-Display;
- Fig. 2: eine Darstellung eines mit einer Ausführungsform des erfindungsgemäßen Verfahrens in mehrere Kacheln aufgeteilten, gerenderten Bildinhalts;
- Fig. 3: eine Darstellung einer Perspektivtransformation einer Kachel;
- Fig. 4: eine Darstellung eines mit einer Ausführungsform des erfindungsgemäßen Verfahrens durch Perspektivtransformationen einzelner Kacheln transformierten Bildinhalts;
- Fig. 5: Darstellungen mehrerer Resultate grundlegender Perspektivtransformationen;
- Fig. 6: eine Darstellung eines Gitters und eines verzerrten Gitters; und
- Fig. 7: eine Darstellung von Einhüllenden von Stützpunkten auf einer Projektionsfläche.

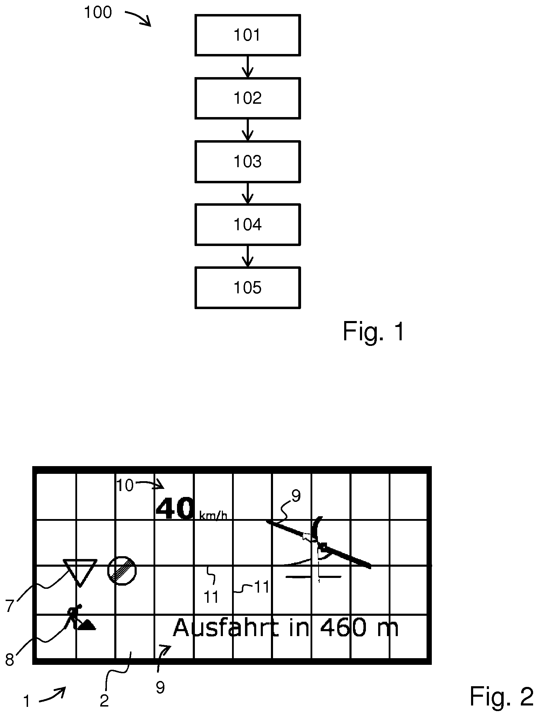

Figur 1 zeigt eine Ausführungsform des Verfahrens 100 zum Transformieren und Anzeigen eines gerenderten Bildinhalts 1 durch ein Head-Up-Display, welches nachfolgend in Bezug auf die weiteren Figuren erläutert wird.

Figur 2 zeigt eine Darstellung eines mit einer Ausführungsform des erfindungsgemäßen Verfahrens 100 in mehrere Kacheln 2 aufgeteilten, gerenderten Bildinhalts 1. Der Bildinhalt 1 enthält mehrere Elemente 7, 8, 9, 10, welche den Betrieb des Fahrzeugs mittelbar und/oder unmittelbar betreffen, insbesondere zu beachtende Verkehrsregeln 7, Warnhinweise 8, Navigationsinformation 9 und/oder Geschwindigkeitsinformation 10. Ein Element 7, 8, 9 10 ist jeweils ein Teil des gesamten Bildinhalts 1. Die Elemente 7, 8, 9 werden vorzugsweise als Piktogramme angezeigt und/oder dargestellt, bzw. abgebildet. Weiter vorzugsweise werden die Elemente 9, 10 als Schriftzeichen und/oder Schriftzug, insbesondere Nummernzeichen, angezeigt und/oder dargestellt, bzw. abgebildet. Der Bildinhalt 1 ist vorzugsweise gerendert, so dass dieser als digitales Bild, insbesondere als Rastergraphik vorliegt. Dadurch kann der Bildinhalt 1 leicht durch digitale Verfahren, insbesondere Transformationen, vorzugsweise Perspektivtransformationen, verarbeitet, d.h. geändert und/oder modifiziert, insbesondere verzerrt, werden.

Der gerenderte Bildinhalt 1 wird in mehrere Bereiche, insbesondere Kacheln 2, vorzugsweise rechteckige Kacheln 2, in Verfahrensschritt 101 aufgeteilt. Weiter vorzugsweise sind die Kacheln 2 quadratisch. Die Ränder der Kacheln 2 sind in dem gezeigten Ausführungsbeispiel zur besseren Anschaulichkeit durch horizontale und vertikale Linien 11 markiert.

Vorzugsweise umschließen einzelne Kacheln 2 einzelne Elemente 7, 8, 9, 10 oder Teile der Elemente 7, 8, 9, 10, d.h. der in den einzelnen Kacheln 2 enthaltene Teil des gesamten Bildinhalts 1 stellt einzelne Elemente 7, 8, 9, 10 oder Teile der Elemente 7, 8, 9, 10 dar.

Vorzugsweise weisen verschiedene Kacheln 2 unterschiedliche Farbtiefen auf, insbesondere 32, 24, 16, 8, oder 4 bit. Weiter vorzugsweise können verschiedene Kacheln auch eine Farbtiefe aufweisen, die zwischen diesen Werten liegt. Weiter vorzugsweise können verschiedene Kacheln auch eine Farbtiefe aufweisen, die größer als 32 bit oder kleiner als 4 bit ist. Weiter vorzugsweise ist die Farbtiefe einer Kachel 2 nur so hoch wie zur klaren und deutlichen, d.h. farbechten, Darstellung des in der Kachel 2 enthaltenen Teils des Bildinhalts 1 notwendig. Insbesondere weisen Kacheln 2, die keine Elemente 7, 8, 9, 10 des Bildinhalts 1 enthalten, eine besonders niedrige Farbtiefe, beispielsweise 4 bit oder 1 bit, auf. Vorzugsweise weisen Kacheln 2, die einfarbige Elemente 7, 8, 9, 10 oder einfarbige Teile der Elemente 7, 8, 9, 10, insbesondere Schriftzeichen bzw. Schriftzüge und/oder Nummernzeichen, enthalten, eine niedrige Farbtiefe, insbesondere 16, 8 oder 4 bit, oder einen Wert zwischen diesen Werten, auf. Dadurch kann der Speicherplatz des gerenderten Bildinhalts 1 bzw. der einzelnen Kacheln 2 signifikant reduziert werden.

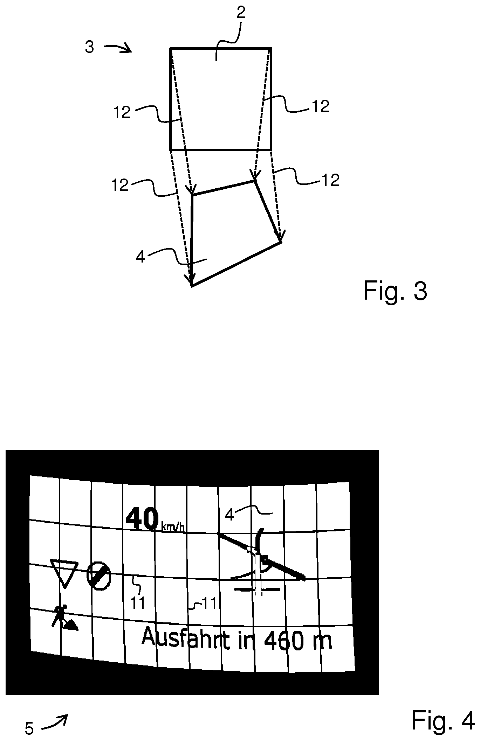

Figur 3 zeigt eine Darstellung einer Perspektivtransformation 3 einer Kachel 2. Die Perspektivtransformation 3 erzeugt in Verfahrensschritt 102 aus einer, vorzugsweise rechteckigen, insbesondere quadratischen, Kachel 2 eine perspektivisch transformierte Kachel 4.

Vorzugsweise wird die Perspektivtransformation 3 durch eine Matrixmultiplikation, insbesondere die Multiplikation mit einer Transformationsmatrix, in Verfahrensschritt 102 ausgeführt. Dabei werden die einzelnen Bildpunkte, insbesondere die vier Eckpunkte, der bevorzugt als Rastergraphik vorliegenden Kachel 2, welche durch Stützvektoren angegeben sind, mit einer Matrix, die eine perspektivische Transformation erzeugt, multipliziert. Stützvektoren sind Vektoren, welche die Lage der Bildpunkte bezüglich eines Ursprungs angeben, insbesondere bezüglich einer der vier Ecken der Kachel 2 oder des aus den Kacheln 2 zusammengesetzten Bildes, d.h. des gerenderten Bildinhalts 1, oder des Mittelpunkts der Kachel 2 oder des aus den Kacheln 2 zusammengesetzten Bildes, d.h. des gerenderten Bildinhalts 1.

Durch die Perspektivtransformation 3, insbesondere durch Multiplikation der Stützvektoren mit einer Transformationsmatrix, wird in dem gezeigten Ausführungsbeispiel den vier Eckpunkten der Kachel 2 in Verfahrensschritt 102 eine neue Lage zugeordnet, angedeutet durch die vier gestrichelten Pfeile 12. Insbesondere ändern sich dabei Betrag, d.h. Länge, und Richtung, d.h. Orientierung, der Stützvektoren der perspektivisch zu transformierenden Bildpunkte.

Entstehen durch die Perspektivtransformation 3 in Verfahrensschritt 102 Lücken zwischen den Bildpunkten der perspektivisch transformierten Kachel 4, werden diese bevorzugt durch eine Interpolation, insbesondere durch eine lineare Interpolation, in Verfahrensschritt 103 geschlossen. Insbesondere Bildpunkten, welche an durch die Perspektivtransformation 3 verschobene Bildpunkte grenzen und/oder zwischen diesen liegen bzw. angeordnet sind, wird durch die Interpolation ein Wert zugeordnet, so dass die perspektivisch transformierte Kachel 4 einen lückenlosen Teil des transformierten Bildinhalts 5 aufweist, d.h. ohne Artefakte darstellbar ist. Vorzugsweise wird durch die lineare Interpolation in Verfahrensschritt 103 eine Glättung des perspektivisch transformierten Bildinhalts durchgeführt, so dass dieser frei von Artefakten durch ein Head-Up-Display darstellbar ist.

Figur 4 zeigt eine Darstellung eines mit einer Ausführungsform des erfindungsgemäßen Verfahrens 100 zusammengesetzten transformierten Bildinhalts 5, der in Verfahrensschritt 104 durch Perspektivtransformationen 3 einzelner Kacheln 2 in Verfahrensschritt 102 erzeugt wurde. Zur besseren Anschaulichkeit sind die Ränder der perspektivisch transformierten Kacheln 4 wie in Fig. 1 durch im Wesentlichen horizontale und im Wesentlichen vertikale Linien 11 gezeigt.

Einzelne Kacheln 2 werden bei der Perspektivtransformation 3 in Verfahrensschritt 102 durch jeweils unterschiedliche Perspektivtransformationen 3, insbesondere jeweils unterschiedliche Transformationsmatrizen, d.h. modular, transformiert und in Verfahrensschritt 104 zu einem perspektivisch transformierten Bildinhalt 5 zusammengesetzt. Der perspektivisch transformierte Bildinhalt 5 wird in Verfahrensschritt 105 vorzugsweise durch ein Head-Up-Display auf eine Projektionsfläche, welche dem Head-Up-Display zugeordnet ist, projiziert, wo er von einem Nutzer, insbesondere dem Fahrer des mit dem Head-Up-Display ausgestatteten Fahrzeugs, als unverzerrtes Bild visuell wahrgenommen wird.

Durch die separate, d.h. modulare, Perspektivtransformation 3 in Verfahrensschritt 102 erhält jede perspektivisch transformierte Kachel 4 vorzugsweise eine andere Form als angrenzende perspektivisch transformierte Kacheln 4. Insbesondere ergibt sich dadurch ein geschlossener bzw. durchgängiger, vorzugsweise artefaktfreier transformierter Bildinhalt 5, der als ein geschlossenes bzw. durchgängiges, vorzugsweise artefaktfreies Bild dargestellt bzw. angezeigt werden kann. Vorzugsweise werden durch die separaten Perspektivtransformationen 3 angrenzende Kacheln 2 auf die Weise perspektivisch transformiert, dass ihre Ränder geschlossen, d.h. bündig, aneinander angrenzen. Weiter vorzugsweise wird für jede Kachel 2 eine Perspektivtransformation 3 aus einer Vielzahl von Perspektivtransformationen 3 gewählt, bzw. die Perspektivtransformation 3 wird für jede Kachel 2, insbesondere separat, angepasst, so dass sich nach der Perspektivtransformation 3 und dem Zusammensetzen mit benachbarten perspektivisch transformierten Kacheln 4 ein geschlossener, artefaktfreier, perspektivisch transformierter Bildinhalt 5 ergibt. Insbesondere werden die jeweiligen Perspektivtransformationen 3 für einzelne Kacheln 2 so gewählt bzw. angepasst, dass nach dem Zusammensetzen zu dem perspektivisch transformierten Bildinhalt 5 keine Kanten, Knicke, Unstetigkeiten und/oder kein Rauschen im perspektivisch transformierten Bildinhalt 5 bzw. dem darstellbaren, perspektivisch transformierten Bild auftreten.

Weiter vorzugsweise wird der gerenderte Bildinhalt 1 vor der Perspektivtransformation 3 in Verfahrensschritt 101 in Kacheln 2 mit überlappenden Rändern aufgeteilt, d.h. ein Teil des gerenderten Bildinhalts 1 wird durch mehr als eine Kachel 2 dargestellt bzw. ist in mehr als einer Kachel 2 enthalten. Insbesondere überlappen die Ränder angrenzender Kacheln 2. Die überlappenden Ränder, d.h. der überlappende Bereich, können bzw. kann verschiedene Breiten aufweisen, insbesondere 1, 2, 3 oder mehr Bildpunkte. Weiter vorzugsweise wird die Breite der überlappenden Ränder gewählt bzw. angepasst, so dass bei dem Zusammensetzen der perspektivisch transformierten Kacheln 4 in Verfahrensschritt 104 zu einem perspektivisch transformierten Bildinhalt 5 jeder Bereich des durch den perspektivisch transformierten Bildinhalt 5 darstellbaren bzw. anzeigbaren und/oder abbildbaren, perspektivisch transformierten Bildes von wenigstens einer perspektivisch transformierten Kachel 4 abgedeckt wird. Dadurch müssen die Ränder der perspektivisch transformierten Kacheln 4 nicht geschlossen, d.h. bündig, aneinander grenzen, so dass bei der Wahl der passenden Perspektivtransformationen 3 für eine einzelne Kachel 2, bzw. der Anpassung der Perspektivtransformation 3 an eine einzelne Kachel 2, größere Freiheit besteht. Insbesondere müssen perspektivisch transformierte Kacheln 4 dadurch nur im Wesentlichen geschlossen, d.h. bündig, aneinander grenzen.

Vorzugsweise wird bzw. werden der überlappende Bereich bzw. die überlappenden Ränder der perspektivisch transformierten Kacheln 4 beim Zusammensetzen in Verfahrensschritt 104 zu einem perspektivisch transformierten Bildinhalt 5 auf die Weise geglättet, insbesondere gemittelt bzw. interpoliert, dass sich ein nahtloser Übergang zwischen angrenzenden perspektivisch transformierten Kacheln 4 ergibt. Dadurch werden Artefakte, insbesondere Kanten, Knicke, Unstetigkeiten und/oder Rauschen im zusammengesetzten perspektivisch transformierten Bildinhalt 5 besonders zuverlässig vermieden.

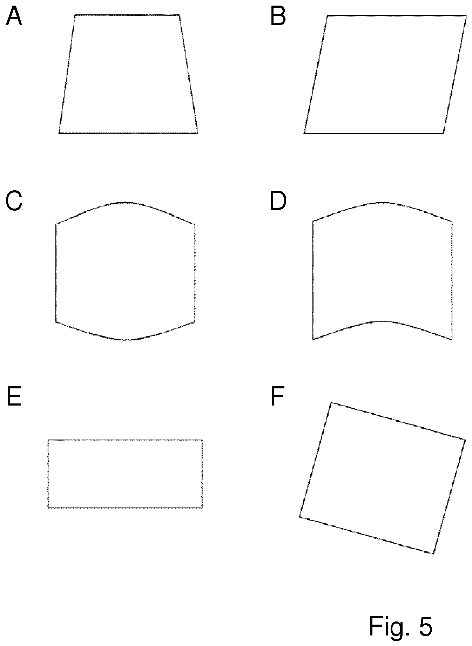

Figur 5 zeigt mehrere Resultate grundlegender Perspektivtransformationen 3.

Figur 5A zeigt das Resultat einer Perspektivtransformation 3, welche eine rechteckige Kachel 2 in eine trapezförmige Kachel perspektivisch transformiert.

Figur 5B zeigt das Resultat einer Perspektivtransformation 3, welche eine rechteckige Kachel 2 in eine parallelogrammförmige Kachel perspektivisch transformiert. Dies ist ein Spezialfall der Fig. 4A.

Figur 5C zeigt das Resultat einer Perspektivtransformation 3, welche eine rechteckige Kachel 2 in eine gewölbte bzw. tonnenförmige Kachel mit zwei konvexen gegenüberliegenden Seiten perspektivisch transformiert.

Figur 5D zeigt das Resultat einer Perspektivtransformation 3, welche eine rechteckige Kachel 2 in eine gewölbte bzw. gewundene Kachel mit einer konvexen und einer konkaven gegenüberliegenden Seite perspektivisch transformiert. Dies ist ein Spezialfall der Fig. 5 C

Figur 5E zeigt das Resultat einer Perspektivtransformation 3, welche eine rechteckige Kachel 2 in eine gestauchte bzw. gestreckte Kachel perspektivisch transformiert.

Fig. 5F zeigt das Resultat einer Perspektivtransformation 3, welche eine rechteckige Kachel 2 in eine, insbesondere gegenüber der rechteckigen Kachel 2, rotierte, d.h. um einen bestimmten Winkel gedrehte, Kachel perspektivisch transformiert.

Vorzugsweise setzt sich die Perspektivtransformation 3 einer einzelnen Kachel 2 aus mehreren grundlegenden Perspektivtransformationen 3 zusammen, deren Resultate in Fig.5A bis F gezeigt sind. Dadurch ist es möglich, für jede einzelne Kachel 2 eine Perspektivtransformation 3 aus einer Vielzahl von Perspektivtransformationen 3 zu wählen bzw. die Perspektivtransformation 3 anzupassen, so dass sich nach dem Zusammensetzen der perspektivisch transformierten Kacheln 4 in Verfahrensschritt 104 ein besonders artefaktfreier, perspektivisch transformierter Bildinhalt 5, welcher insbesondere frei von Kanten, Knicken, Unstetigkeiten und/oder Rauschen ist, ergibt.

Um zu bestimmen, auf welche Weise ein gerenderter Bildinhalt 1 in Verfahrensschritt 102 perspektivisch transformiert werden muss, um dem Fahrer eines Fahrzeugs in Verfahrensschritt 105 als unverzerrtes Bild angezeigt zu werden, d.h. auf welche Weise ein gerenderter Bildinhalt 1 an den Strahlengang des Head-Up-Displays, d.h. von bilderzeugender Einheit des Head-Up-Displays über die Projektionsfläche bis zum Auge des Fahrers, angepasst werden muss, wird ein reguläres, insbesondere regelmäßiges, Gitter 13, verzerrt, so dass die Verzerrung der Anpassung an den Strahlengang entspricht.

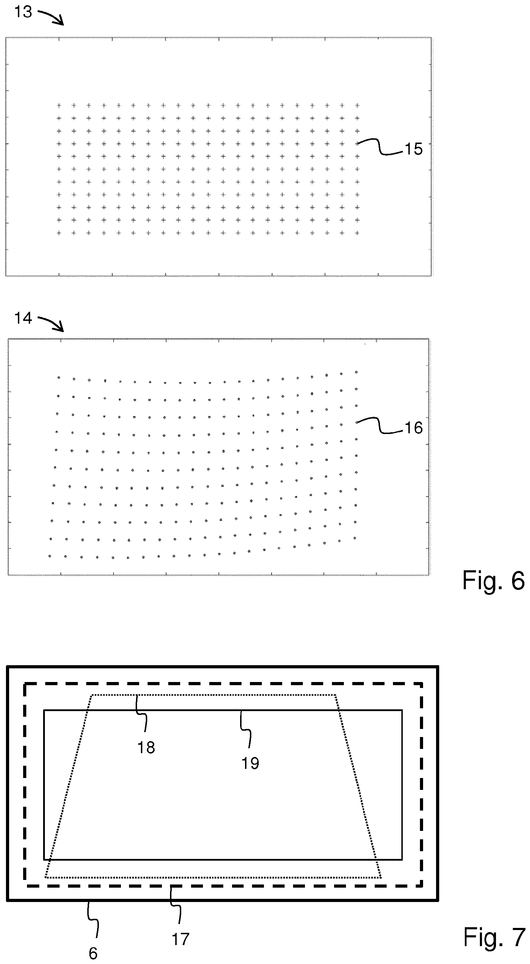

Figur 6 zeigt eine Darstellung eines regulären Gitters 13 (obere Bildteil) und eines durch die Verzerrung resultierenden verzerrten Gitters 14 (unterer Bildteil). Die Gitterpunkte 15 des regulären Gitters 13, als Kreuze dargestellt, werden beim Aufteilen des gerenderten Bildinhalts 1 in mehrere Kacheln 2 verwendet bzw. berücksichtigt. Die Gitterpunkte 16 des verzerrten Gitters 14, als Punkte dargestellt, werden bei der Auswahl der passenden Perspektivtransformation 3 bzw. der Anpassung der Perspektivtransformation 3 einer einzelnen perspektivisch zu transformierenden Kachel 2 verwendet bzw. berücksichtig. Dadurch wird zuverlässig sichergestellt, dass die perspektivische Transformation des gerenderten Bildinhalts 1 in Verfahrensschritt 102 der Anpassung an den Strahlengang des Head-Up-Displays entspricht.

Vorzugsweise wird die Verzerrung des regulären Gitters 13, d.h. die Überführung in ein verzerrtes Gitter 14, durch eine Perspektivtransformation 3 bzw. eine Kombination aus den grundlegenden Perspektivtransformationen 3, deren Resultate in Fig. 4 gezeigt sind, vorgenommen.

Weiter vorzugsweise geben die Gitterpunkte 15 des regulären Gitters 13 die Lage der Kacheln 2 an. Weiter vorzugsweise gebend die Gitterpunkte 16 des verzerrten Gitters 14 die Lage der perspektivisch transformierten Kacheln 4 an. Insbesondere fungieren die Gitterpunkte 15 des regulären Gitters 13 als Ausgangsstützpunkte der Kacheln 2, vorzugsweise als deren Mittelpunkt oder einer ihrer Eckpunkte. Insbesondere fungieren die Gitterpunkte 16 des verzerrten Gitters 14 als Zielstützpunkte der perspektivisch transformierten Kacheln 4, vorzugsweise als deren Mittelpunkt oder einer ihrer Eckpunkte.

Figur 7 zeigt eine Darstellung der Verteilung von regulärem und verzerrten Gitter 13, 14 auf einer bilderzeugenden Einheit. Die bilderzeugende Einheit ist dazu ausgebildet, Bildinhalt auf einer Anzeige 6 in Verfahrensschritt 105 als Bild darzustellen bzw. abzubilden. Von der Anzeige 6 ist vorzugsweise nur ein bestimmter Transformationsbereich 17, dargestellt durch die gestrichelte Linie, zur Darstellung bzw. Abbildung des perspektivisch transformierten Bildinhalts 5 vorgesehen. Die Perspektivtransformationen 3 der einzelnen Kacheln 2 werden vorzugsweise so gewählt bzw. angepasst, dass in Verfahrensschritt 102 perspektivisch transformierter Bildinhalt 5 nicht über den Transformationsbereich 17 hinausragt.

Die Lage der Gitterpunkte 16 des verzerrten Gitters 14 liegt vorzugsweise innerhalb eines Zielbereichs 18, dargestellt durch eine dünne gepunktete Linie, welcher insbesondere Teil des Transformationsbereichs 17 ist. Der Zielbereich 18 fungiert als Hülle der Gitterpunkte16 des verzerrten Gitters bzw. der Zielstützpunkte der perspektivisch transformierten Kacheln 4. Der Zielbereich 18 ist vorzugsweise kleiner als der Transformationsbereich 17, da die perspektivisch transformierten Kacheln 2 eine laterale Ausdehnung aufweisen und somit verhindert wird, dass perspektivisch transformierte Kacheln 4 und damit Teile des perspektivisch transformierten Bildinhalts 5 über den Transformationsbereich 17 hinausragen.

Die Lage der Gitterpunkte 15 des regulären Gitters 13 ist durch den Ausgangsbereich 19, dargestellt durch eine durchgezogene dünne Linie, angezeigt. Der Ausgangsbereich fungiert als Hülle der Gitterpunkte 15 des regulären Gitters 13 bzw. der Ausgangsstützpunkte der Kacheln 2. Der Ausgangsbereich 19 ist vorzugsweise kleiner als der Transformationsbereich 17, da die Lage einzelner Kacheln 2 durch die Perspektivtransformation 3 auf den Rand der Anzeige 6 bzw. auf den Rand des Transformationsbereichs 17 zu verschoben werden bzw. die laterale Ausdehnung einzelner Kacheln 2 zunehmen kann. Somit wird zuverlässig sichergestellt, dass in mehrere Kacheln 2 aufgeteilter, gerenderter Bildinhalt 1 nach der Perspektivtransformation 3 und Zusammensetzen der einzelnen Kacheln 2 zu einem perspektivisch transformierten Bildinhalt 5 nicht über die Anzeige 6 bzw. den Transformationsbereich 17 der Anzeige 6 hinausragt.

### Bezugszeichenliste

- 1: gerenderter Bildinhalt
- 2: Kachel
- 3: Perspektivtransformation
- 4: perspektivisch transformierte Kachel
- 5: transformierter Bildinhalt
- 6: Anzeige
- 7: Verkehrsregeln
- 8: Warnhinweis
- 9: Navigationsinformation
- 10: Geschwindigkeitsinformation
- 11: Kachelrand
- 12: Pfeil
- 13: reguläres Gitter
- 14: verzerrtes Gitter
- 15: Gitterpunkt des regulären Gitters
- 16: Gitterpunkt des verzerrten Gitters
- 17: Transformationsbereich
- 18: Zielbereich
- 19: Ausgangsbereich
- 100: Verfahren zum perspektivischen Transformieren und Anzeigen eines gerenderten Bildinhalts durch ein Head-Up-Display
- 101: Aufteilen des gerenderten Bildinhalts in mehrere Kacheln
- 102: perspektivisches Transformieren mehrerer Kacheln
- 103: Interpolation
- 104: Zusammensetzen perspektivisch transformierter Kacheln zu einem perspektivisch transformierten Bildinhalt
- 105: Projektion von perspektivisch transformiertem Bildinhalt auf eine Projektionsfläche durch ein Head-Up-Display

## Patentansprüche

1. Verfahren (100) zum perspektivischen Transformieren und Anzeigen eines gerenderten Bildinhalts durch ein Head-Up-Display, aufweisend folgende Sch ritte:
- Aufteilen (101) des anzuzeigenden Bildinhalts (1) in mehrere Kacheln (2);
- Transformieren (102) der einzelnen Kacheln (2) durch jeweils eine Perspektivtransformation (3);
- Zusammensetzen (104) der einzelnen, perspektivisch transformierten Kacheln (4) zu einem transformierten Bildinhalt (5); und
- Projektion (105) des perspektivisch transformierten Bildinhaltes (5) auf eine Projektionsfläche, welche dem Head-Up-Display zugeordnet ist,
wobei die perspektivisch transformierten Kacheln (4) in einem Puffer-Speicher abgelegt werden und
wobei nur der Teil der mehreren Kacheln (2) perspektivisch transformiert wird (102), welcher Elemente (7, 8, 9, 10) des Bildinhalts (1) enthält, die sich bezüglich eines zuvor zu transformierenden und anzuzeigenden Bildinhalts geändert haben, und die restlichen transformierten Kacheln (4) zum Zusammensetzen (104) des perspektivisch transformierten Bildinhalts (5) aus dem Puffer-Speicher geladen werden.

2. Verfahren (100) nach Anspruch 1, wobei beim Transformieren (102) die einzelnen Kacheln (2) hinsichtlich mindestens einem der folgenden Merkmale perspektivisch transformiert wird: Trapezform, Streckung bzw. Stauchung, Rotation, Versatz.

3. Verfahren (100) nach Anspruch 1 oder 2, wobei angrenzende Kacheln (2) überlappende Bildinhalte aufweisen.

4. Verfahren (100) nach einem der vorangehenden Ansprüche, wobei der Bildinhalt (1) als Rastergraphik vorliegt.

5. Verfahren (100) nach Anspruch 4, wobei bei der Perspektivtransformation (3) eine Interpolation (103), insbesondere eine lineare Interpolation, einzelner Bildpunkte einer Kachel (4), insbesondere der Bildpunkte, welche an durch die Perspektivtransformation (3) verschobene Bildpunkte grenzen und/oder zwischen diesen liegen, durchgeführt wird.

6. Verfahren (100) nach einem der vorangehenden Ansprüche, wobei die einzelnen Kacheln (2) durch Multiplikation mit einer Transformationsmatrix perspektivisch transformiert (102) werden.

7. Verfahren (100) nach Anspruch 6, wobei die Transformationsmatrix aus einer Vielzahl von Transformationsmatrizen gewählt wird.

8. Verfahren (100) nach einem der vorangehenden Ansprüche, wobei das perspektivische Transformieren (102) der einzelnen Kacheln (2) von einem Graphikmodul über eine Graphik-Programmierschnittstelle, insbesondere OpenVG, durchgeführt wird.

9. Verfahren (100) nach einem der vorangehenden Ansprüche, wobei verschiedene Teile der mehreren Kacheln (2) unterschiedliche Farbtiefen aufweisen, insbesondere 32, 24, 16, 8 und 4 bit.

10. Verfahren (100) nach einem der vorangehenden Ansprüche, wobei die mehreren Kacheln (2) bei der perspektivischen Transformation (102) durch eine Punkt- oder Linienspiegelung gespiegelt und zu einem perspektivisch transformierten, gespiegelten Bildinhalt (5) zusammengesetzt werden (104).

11. Head-Up-Display zum perspektivischen Transformieren und Anzeigen eines gerenderten Bildinhalts mit einem Verfahren (100) nach einem der vorangehenden Ansprüche, aufweisend
- eine Steuereinheit, welche ein erstes Modul, eingerichtet zum Aufteilen (101) des anzuzeigenden Bildinhalts (1) in mehrere Kacheln (2), ein zweites Modul, eingerichtet zum Transformieren (102) der einzelnen Kacheln (2) durch jeweils eine Perspektivtransformation (3), und ein drittes Modul, eingerichtet zum Zusammensetzen (104) der einzelnen, perspektivisch transformierten Kacheln (4) zu einem transformierten Bildinhalt (5), aufweist; und
- eine Projektionseinheit, welche zum Projizieren (105) des perspektivisch transformierten Bildinhalts (1) auf eine Projektionsfläche, die dem Head-Up-Display zugeordnet ist, eingerichtet ist,
wobei die Steuereinheit ferner dazu eingerichtet ist, die perspektivisch transformierten Kacheln (4) in einem Puffer-Speicher abzulegen, und
wobei das zweite Modul ferner dazu eingerichtet ist, nur den Teil der mehreren Kacheln (2) perspektivisch zu transformieren (102), welcher Elemente (7, 8, 9, 10) des Bildinhalts (1) enthält, die sich bezüglich eines zuvor zu transformierenden und anzuzeigenden Bildinhalts geändert haben, und
wobei die Steuereinheit ferner dazu eingerichtet ist, die restlichen transformierten Kacheln (4) zum Zusammensetzen (104) des perspektivisch transformierten Bildinhalts (5) aus dem Puffer-Speicher zu laden.

12. Fahrzeug, insbesondere Kraftfahrzeug, aufweisend ein Head-Up-Display nach Anspruch 11.

## Claims

1. Method (100) for the perspective transformation and display of a rendered image content by a head-up display, comprising the following steps:
- dividing (101) the image content (1) that is to be displayed into a plurality of tiles (2);
- transforming (102) the individual tiles (2) by means of in each case one perspective transformation (3);
- combining (104) the individual, perspectively transformed tiles (4) to form a transformed image content (5); and
- projecting (105) the perspectively transformed image content (5) onto a projection surface assigned to the head-up display,
wherein the perspectively transformed tiles (4) are stored in a buffer memory, and
wherein only that part of the plurality of tiles (2) that contains elements (7, 8, 9, 10) of the image content (1) that have changed with respect to an image content that was to be transformed and displayed previously is perspectively transformed (102), and the remaining transformed tiles (4) are loaded from the buffer memory for the purposes of combining (104) to form the perspectively transformed image content (5).

2. Method (100) according to Claim 1, wherein the individual tiles (2) are perspectively transformed during the transformation (102) with respect to at least one of the following features: trapezoid shape, stretching and/or compression, rotation, offset.

3. Method (100) according to Claim 1 or 2, wherein adjoining tiles (2) have overlapping image contents.

4. Method (100) according to one of the preceding claims, wherein the image content (1) is present in the form of raster graphics.

5. Method (100) according to Claim 4, wherein an interpolation (103), in particular a linear interpolation, of individual image points of a tile (4), in particular of the image points which adjoin image points that have been displaced by the perspective transformation (3) and/or lie between the latter, is carried out during the perspective transformation (3).

6. Method (100) according to one of the preceding claims, wherein the individual tiles (2) are perspectively transformed (102) by multiplication by a transformation matrix.

7. Method (100) according to Claim 6, wherein the transformation matrix is chosen from a multiplicity of transformation matrices.

8. Method (100) according to one of the preceding claims, wherein the perspective transformation (102) of the individual tiles (2) is carried out by a graphics module via a graphics programming interface, in particular OpenVG.

9. Method (100) according to one of the preceding claims, wherein different parts of the plurality of tiles (2) have different colour depths, in particular 32, 24, 16, 8 and 4 bits.

10. Method (100) according to one of the preceding claims, wherein the plurality of tiles (2) are mirrored by point or line mirroring during the perspective transformation (102) and are combined (104) to form a perspectively transformed, mirrored image content (5).

11. Head-up display for the perspective transformation and display of a rendered image content by a method (100) according to one of the preceding claims, including
- a control unit having a first module, configured for dividing (101) the image content (1) that is to be displayed into a plurality of tiles (2), a second module, configured for transforming (102) the individual tiles (2) by means of in each case one perspective transformation (3), and a third module, configured for combining (104) the individual, perspectively transformed tiles (4) to form a transformed image content (5); and
- a projection unit configured for projecting (105) the perspectively transformed image content (1) onto a projection surface assigned to the head-up display, wherein the control unit is furthermore configured for storing the perspectively transformed tiles (4) in a buffer memory and
wherein the second module is furthermore configured for perspectively transforming only that part of the plurality of tiles (2) that contains elements (7, 8, 9, 10) of the image content (1) that have changed with respect to an image content that was to be transformed and displayed previously, and
wherein the control unit is furthermore configured for loading the remaining transformed tiles (4) from the buffer memory for the purposes of combining (104) to form the perspectively transformed image content (5).

12. Vehicle, in particular a motor vehicle, having a head-up display according to Claim 11.

## Revendications

1. Procédé (100) de transformation en perspective et d'affichage d'un contenu d'image rendu par un afficheur tête haute, comprenant les étapes suivantes :
- division (101) du contenu d'image (1) à afficher en plusieurs carreaux (2) ;
- transformation (102) des carreaux (2) individuels respectivement par une transformation en perspective (3) ;
- assemblage (104) des carreaux (4) individuels transformés en perspective en un contenu d'image transformé (5) ; et
- projection (105) du contenu d'image transformé (5) en perspective sur une surface de projection qui est associée à l'afficheur tête haute,
les carreaux transformés en perspective (4) étant stockés dans une mémoire tampon et
seule étant transformée en perspective (102) la partie des plusieurs carreaux (2) qui contient des éléments (7, 8, 9, 10) du contenu d'image (1) qui ont été modifiés par rapport à un contenu d'image à transformer et à afficher précédemment, et le reste des carreaux transformés en perspective (4) étant chargés depuis la mémoire tampon en vue de l'assemblage (104) du contenu d'image transformé (5) en perspective.

2. Procédé (100) selon la revendication 1, la transformation en perspective, lors de la transformation (102) des carreaux (2) individuels, s'effectuant du point de vue d'au moins l'une des caractéristiques suivantes : forme trapézoïdale, allongement ou écrasement, rotation, décalage.

3. Procédé (100) selon la revendication 1 ou 2, les carreaux (2) adjacents possédant des contenus d'image qui se chevauchent.

4. Procédé (100) selon l'une des revendications précédentes, le contenu d'image (1) étant présent sous la forme d'un graphique matriciel.

5. Procédé (100) selon la revendication 4, une interpolation (103), notamment une interpolation linéaire, des pixels individuels d'un carreau (4), notamment des pixels qui sont adjacents des pixels décalés par la transformation en perspective (3) et/ou qui se trouvent entre ceux-ci, étant effectuée lors de la transformation en perspective (3).

6. Procédé (100) selon l'une des revendications précédentes, les carreaux (2) individuels étant transformés en perspective (102) par multiplication par une matrice de transformation.

7. Procédé (100) selon la revendication 6, la matrice de transformation étant sélectionnée parmi une pluralité de matrices de transformation.

8. Procédé (100) selon l'une des revendications précédentes, la transformation en perspective (102) des carreaux (2) individuels étant effectuée par un module graphique par le biais d'une interface de programmation graphique, notamment OpenVG.

9. Procédé (100) selon l'une des revendications précédentes, différentes parties des plusieurs carreaux (2) possédant des profondeurs de couleur différentes, notamment de 32, 24, 16, 8 et 4 bits.

10. Procédé (100) selon l'une des revendications précédentes, les carreaux (2) individuels, lors de la transformation en perspective (102), étant reflétés par une réflexion ponctuelle ou linéaire et étant assemblés (104) en un contenu d'image (5) réfléchi transformé en perspective.

11. Afficheur tête haute pour la transformation en perspective et l'affichage d'un contenu d'image rendu avec un procédé (100) selon l'une des revendications précédentes, comprenant :
- une unité de commande, laquelle possède un premier module conçu pour diviser (101) le contenu d'image (1) à afficher en plusieurs carreaux (2), un deuxième module conçu pour transformer (102) les carreaux (2) individuels respectivement par une transformation en perspective (3), et un troisième module conçu pour assembler (104) les carreaux (4) individuels transformés en perspective en un contenu d'image transformé (5) ; et
- une unité de projection, laquelle est conçue pour projeter (105) le contenu d'image transformé (1) en perspective sur une surface de projection qui est associée à l'afficheur tête haute,
l'unité de commande étant en outre conçue pour stocker les carreaux transformés en perspective (4) dans une mémoire tampon et
le deuxième module étant en outre conçu pour ne transformer en perspective (102) que la partie des plusieurs carreaux (2) qui contient des éléments (7, 8, 9, 10) du contenu d'image (1) qui ont été modifiés par rapport à un contenu d'image à transformer et à afficher précédemment, et
l'unité de commande étant en outre conçue pour charger le reste des carreaux transformés en perspective (4) depuis la mémoire tampon en vue de l'assemblage (104) du contenu d'image transformé (5) en perspective.

12. Véhicule, notamment véhicule automobile, comprenant un afficheur tête haute selon la revendication 11.
